# EUROPEAN PATENT APPLICATION

(11) **EP 4 684 644 A1**
(43) Date of publication of application: **28.01.2026**
(21) Application number: 24191286.4
(22) Date of filing: 26.07.2024
(51) Int. Cl.: A23C 9/15, A23C 21/06

(54) **METHOD FOR REFINING WHEY IN ORDER TO PREPARE SOURCE MATERIAL FOR MILK PRODUCT AND A MILK PRODUCT USING WHEY AS SOURCE MATERIAL**

(71) Applicant: Osaühing Estover Piimatööstus, 61104 Elva vald Tartu maakond (EE)
(72) Inventor: Pertelson, Birgit, 61104 Kaarlijärve küla, Elva vald (EE); Mootse, Hannes, 61104 Kaarlijärve küla, Elva vald (EE); Teder, Ago, 61104 Kaarlijärve küla, Elva vald (EE)
(74) Representative: Koitel, Raivo

(57) **Abstract**

Heat treatment of whey/whey concentrate and separation of lean whey from the protein curd and partially adding lean whey back to it during pressure homogenisation of the resulting mixture produces a uniform, homogeneous, emulsion-like liquid protein mass, which is the source material to produce a milk product.

## Description

### Technical field

The invention pertains to the dairy industry and involves a method for adding value to whey and producing a milk product, including acidified milk products.

### Prior Art

The dairy industry generates significant quantities of whey as a by-product during cheese manufacture, which presents a challenge for economically viable repurposing. Whey (greenish-yellow liquid), is a by-product obtained when, during the manufacture of cheese, milk coagulates and casein (milk protein) is separated. For example, the production of one kilogram of cheese yields about 8 to 10 litres of (cheese) whey. Conventionally, excess whey is processed into whey powder (used as animal feed and also as protein-rich food supplements for athletes (which athletes use in the form of so-called power powder)) or surplus lean whey may be used to produce biogas. However, these solutions are not economically optimal for the recovery of whey.

Several methods for processing (adding value to) whey and utilising it in the dairy industry are known in the state of the art.

A known whey processing method (UA105893U, Nat Univ Food Technologies, published on 11.04.2016) enriches whey with biogenic metal, manganese, and particles to increase its biological value. This method includes receiving and quality control of raw materials, cooling and intermediate storage, heating to 35-40 °C, defatting of whey, pasteurisation of milk whey, cooling, and storage for further use. However, this approach has a drawback in that it requires the addition of metal to enrich the whey.

Known is a method for preparing a liquid milk mixture (WO2015197496A1, Nestec SA, published on 30.12.2015) which comprises the following steps: mixing milk protein with whey and optionally adding water, fat, oil and/or emulsifiers to the mixture of milk protein and whey; adjusting the pH with organic acid to 5.8-6.2; homogenising the mixture; and heat treating it to 85-100 °C for one to three minutes. The disadvantage here is the use of components not related to the original raw material. In this invention, not only milk-related primary components are used to obtain the mixture.

A method for regulating the ratio of whey protein to casein in skim milk is known (WO9608155, New Zealand Dairy Board, Bhaskar Ganugapati Vijaya, et al., published on 21.03.1996). This invention uses microfiltration and ultrafiltration to separate casein and whey proteins from skim milk. The invention uses the possibility of microfiltration and ultrafiltration to separate casein and whey proteins from the source material of skim milk. The drawback is the high casein content in the final product.

The closest method related to the method of the invention is for processing whey protein (US2010047423, Tetra Kavk Holdings & Finance, published on 25.02.2010), involving the processing of whey protein using microparticles. Microparticles comprises heat treatment and mechanical processing of whey protein. The method includes the steps of passing the protein concentrate through a high-pressure pump and treating it at elevated pressure. This heat treatment of the protein concentrate is followed by mechanical treatment. The limitation is that it focuses only on processing the protein mass into raw material for milk products.

The closest related product to the milk product of this invention is a whey protein product (WO2011/051557 A1, Valio Ltd, published on 05.05.2011), which comprises whey protein and casein, with casein content between 5 and 50 wt%. In a preferred embodiment of the invention, a whey protein product (acidified drink) is prepared from skim milk, where the typical total protein content of the product is 2.5 to 8 wt%, casein making up 5 to 50 wt% of the protein, whey protein enriched with *α*-lactalbumin and *β-*lactoglobulin making up 50 to 95 wt%, fat content usually between about 0.01 and 3.5 wt%, and lactose content less than 1 wt%. The drawback is that the product is made from skim milk, not whey.

### Summary of the invention

The applicant investigated additional possibilities for adding value whey to use it as a source material for milk products. The primary motivation for developing this invention was economic, aiming to reuse whey, a production residue of the dairy industry. The proposed method for processing whey into a milk product is economically more advantageous than converting whey into whey powder or biogas.

Research revealed that heat treatment and high-pressure homogenisation of whey resulted in a uniform substance - a homogeneous emulsion-like liquid protein mass - with desirable properties to manufacture milk products, including acidified milk products (source material for milk products).

This homogeneous, emulsion-like liquid protein mass is obtained from whey or whey concentrate produced as a by-product during cheese manufacture (cheese whey). During the milk coagulation and cheese-making process, most of the casein is transferred to the cheese mass, while the whey proteins remain mostly in the (cheese) whey.

The method for adding value to whey, as per the invention, involves precipitating protein (dry matter) from the whey/whey concentrate, and following precipitation, liquid/lean whey is separated from the protein mass ((whey) protein curd) (liquid separation is also accompanied by a reduction of lactose and minerals in the protein mass). Subsequently, the separated liquid/lean whey is partially reintroduced to the precipitated protein mass (dry matter), and optionally cream (according to the recipe) and the normalised mixture is homogenised. Also, milk is added (according to the recipe) to the buffered/stored whey/whey concentrate and this improves the consistency, increases fatness and improves the output of protein mass. As a result a new homogeneous emulsion-like liquid protein mass is obtained, which serves as the source material for various milk products, including acidified ones.

According to the invention, whey/whey concentrate is used to prepare the milk product, from which a homogeneous emulsion-like liquid protein mass is obtained as a result of adding value to the whey with the method of the invention. This protein mass, intended as the source material for milk product, including acidified milk products, is suitable for producing milk product with high whey protein content and additionally significantly reduced casein content.

An preferred embodiment of the method of the invention includes the following steps: whey obtained during cheese manufacture is used, this whey is buffered/stored for a short time, then milk is added (according to the recipe), obtained solution is heated to a temperature of 65 °C, pumped into a technological tank, heat-treated to form protein curd, preferably directly with steam at 83-90 °C, lean whey is separated from the protein curd that has formed, then the lean whey is partially added back to the protein curd (according to the recipe) and the mixture of protein curd (coagulated protein) and lean whey is pumped into the mixer tank and mixed. The resulting mixture is homogenised at a pressure of 80 to 150 bar and a temperature of 35 to 90 °C, and cooled. Homogenisation is optionally carried out in multiple stages. The final result is a homogeneous emulsion-like liquid protein mass, in which the protein mass comprises protein (whey protein) from 60 to 95 wt% and this mass serves as the source material for a milk product, for preparing different milk products (including acidified milk products such as yogurt, kefir, skyr, or also non-acidified milk drink). Depending on the milk product, additives such as flavours and/or fragrances and/or sweeteners, e.g. syrups, jams, etc., may be optionally added to enhance/enrich the flavours.

According to one embodiment, in addition to milk according to the recipe, also whey concentrate is added to the buffered/stored whey according to the recipe. This makes it possible to prepare many more different milk products. Adding whey concentrate to whey improves the extraction of protein curd.

According to another embodiment, whey concentrate obtained from whey during cheese manufacture is used and in addition to milk according to the recipe, also water is added to the buffered/stored whey concentrate according to the recipe. Adding water to whey concentrate results in reconstituted whey. This embodiment makes it possible to save on transport costs during the production process.

All these embodiments have an extra embodiment - optionally also cream is added (according to the recipe) to the protein curd together with partially added back lean whey. This allows to produce yet numerous various milk products.

A milk product made from whey comprises whey (whey protein 60 to 95 wt%), optionally flavours and/or fragrances and/or sweeteners (e.g. syrups, jams, etc.), milk, optionally cream, lactose or enzyme (in lactose-free products), optionally sourdough (if the product is heated before packaging, then the composition of the final product does not contain active microflora from sourdough), fat, casein, minerals, vitamins, water, proteins (*α*-lactalbumins, *β*-lactoglobulins, serum albumins, immunoglobulins, lactoferrin, glycomacropeptides).

### List of drawings

Fig 1A shows the technological diagram of the preferred embodiment of the method for producing the source material of the milk product from whey and Fig 1B shows its additional embodiment.
Fig 2A shows the technological diagram of one additional embodiment of the method for producing the source material for a milk product from whey and Fig 2B shows its additional embodiment.
Fig 3A shows the technological diagram of another additional embodiment of the method for producing the source material for a milk product from whey concentrate made from whey and Fig 3B shows its additional embodiment.

### Embodiment of the invention

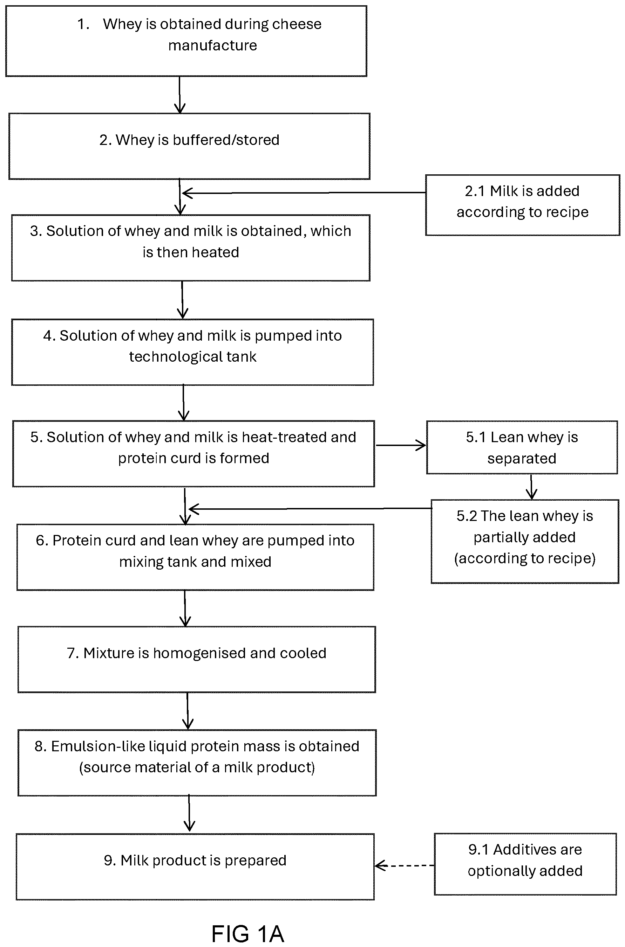

The technological diagram of the preferred embodiment of the invention for adding value to whey and producing a milk product from whey is shown in Fig 1A, according to which:
1. (cheese) whey obtained during cheese manufacture is used, which comprises:
   - water >90%,
   - lactose 4% to 5%;
   - proteins: *α*-lactalbumins, *β*-lactoglobulins, serum albumins, immunoglobulins, lactoferrin, glycomacropeptides, some casein residues;
   - minerals: calcium, potassium, phosphorus, magnesium;
   - vitamins: small amounts of vitamins B, vitamin D;
   - fat <0.5%;
2. whey is buffered/stored for a short time;
   2.1 milk (according to the recipe) is added to the whey;
3. obtained solution of whey and milk is heated up to a temperature of 65 °C;
4. heated solution of whey and milk is pumped into a technological tank;
5. solution of whey and milk is heat-treated to a temperature of 83 to 90 °C (preferably directly with steam) to form a protein curd;
   5.1 lean whey is separated from the protein curd;
   5.2 lean whey is partially added back to the protein curd (according to the recipe);
6. protein curd (coagulated protein) and a part of its lean whey (added according to the recipe) are pumped into a mixer tank and mixed;
7. the resulting mixture is homogenised at a pressure of 80 to 150 bar and at a temperature of 35 to 90 °C, and then cooled, optionally with a multi-step homogenisation step to obtain a more uniform mass;
8. a homogeneous emulsion-like liquid protein mass is obtained, which is the source material for various milk products, in which the protein mass comprises whey protein from 60 to 95 wt%;
9. the resulting homogeneous emulsion-like liquid protein mass is refined into a milk product, e.g., acidified milk product or some other milk product;
   9.1. depending on the milk product, additives such as flavours and/or fragrances and/or sweeteners, such as syrups, jams, etc., may be optionally added to bring out the flavours.

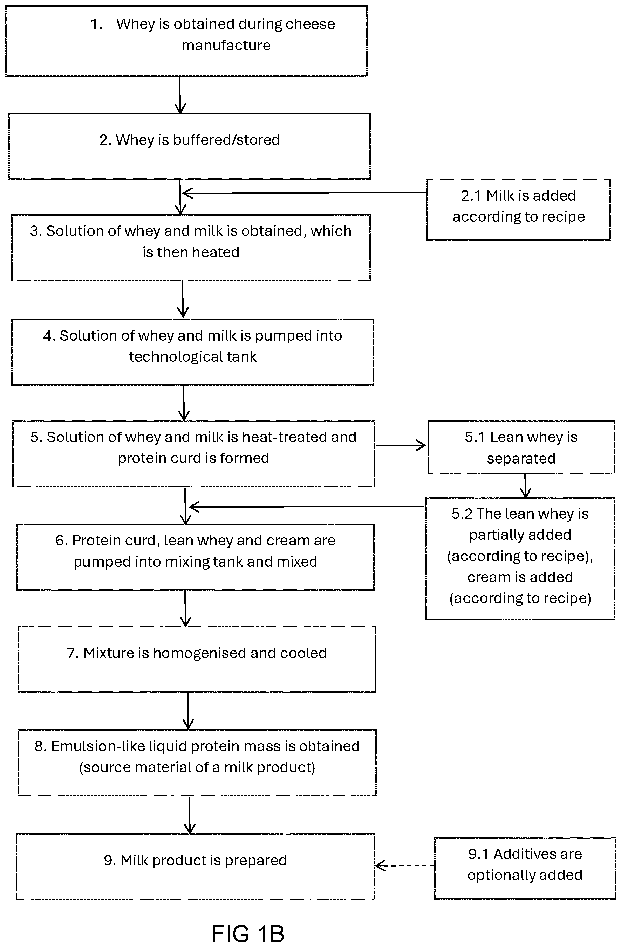

Fig 1B shows the additional technological diagram of preferred embodiment of the invention of Fig 1A, which additionally includes improved step 5.2, according to which in addition to partially added back lean whey (according to the recipe), also cream (according to the recipe) is added to protein curd.

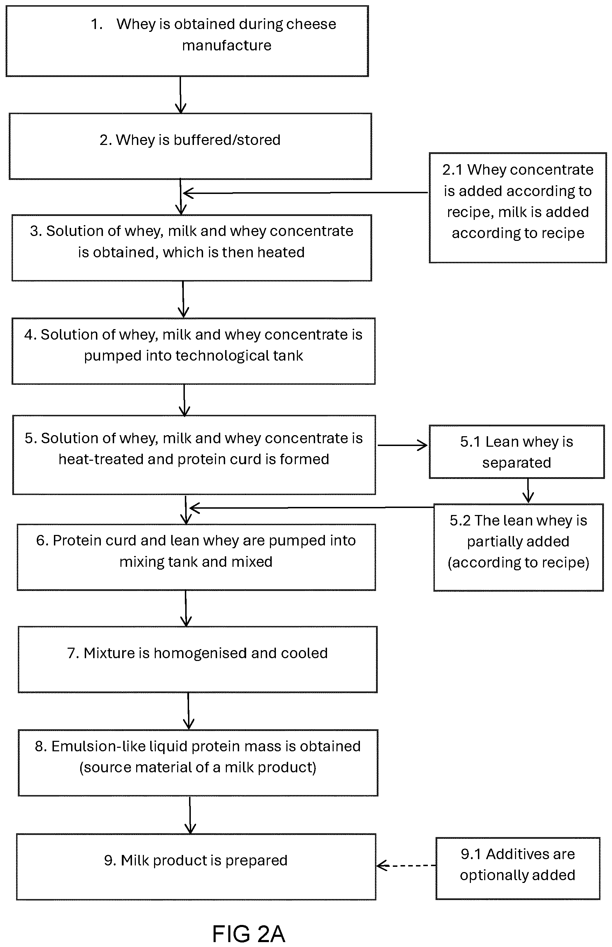

Fig 2A is the technological diagram of one additional embodiment of the invention according to which whey obtained during cheese manufacture is used and which includes step 2.1, according to which whey concentrate according to the recipe and milk according to the recipe is added.

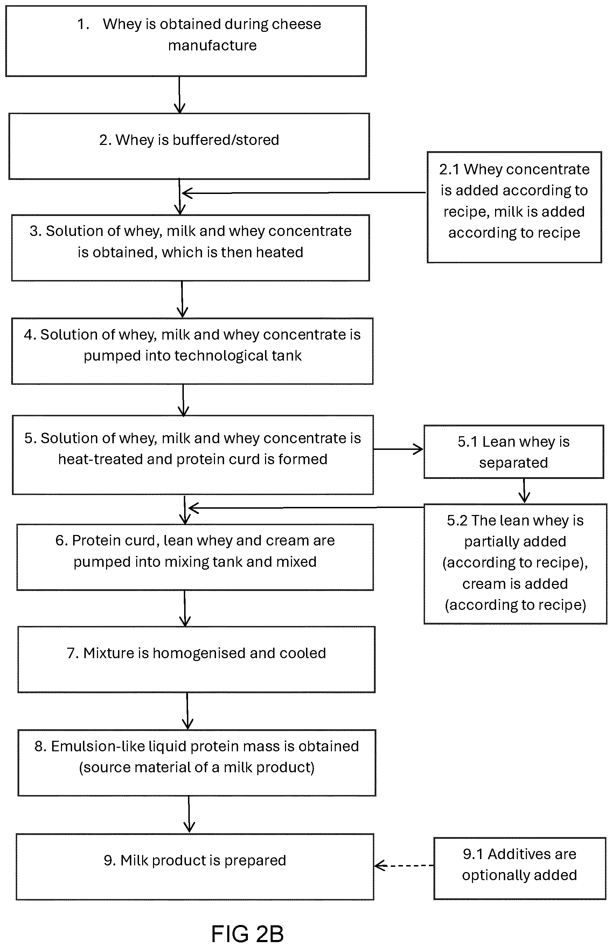

Fig 2B shows the additional technological diagram of one additional embodiment of the invention of Fig 2A, which additionally includes improved step 5.2, according to which in addition to partially added back lean whey (according to the recipe) also cream (according to the recipe) is added to protein curd.

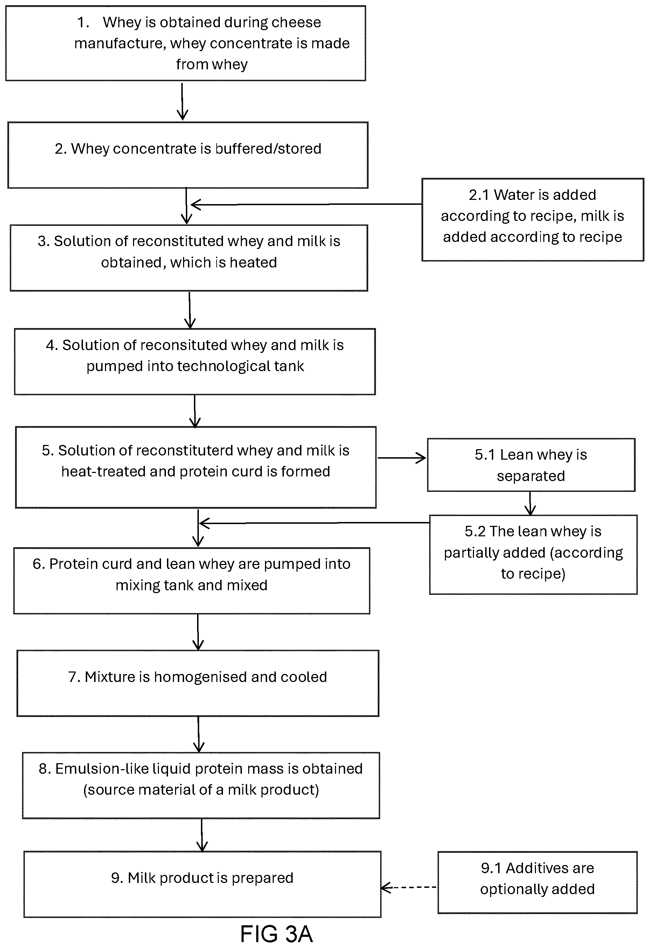

Fig 3A shows the technological diagram of yet another additional embodiment of the invention, according to which whey concentrate made from whey obtained during cheese manufacture is used and which includes step 2.1, according to which water according to the recipe and milk according to the recipe is added.

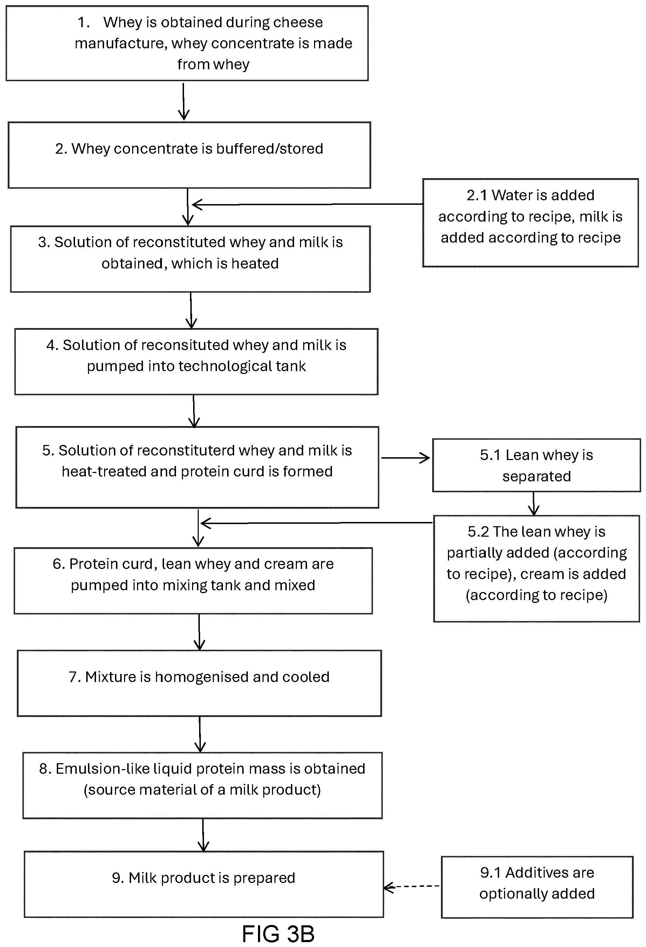

Fig 3B shows the additional technological diagram of one additional embodiment of the invention of Fig 3A, which additionally includes improved step 5.2, according to which in addition to partially added back lean whey (according to the recipe), also cream (according to the recipe) is added to protein curd.

Explanation that the pH of fresh whey is between 6.2 and 6.5. Whey concentrate has significantly the characteristics of fresh whey and its dry matter has been increased to a level of 19 to 25% (pH between 6.2 and 6.5). If fresh whey is mixed with whey concentrate, it also changes the pH, dry matter and other properties of the fresh whey.

A milk product made from whey comprises whey, optionally flavourings (sweeteners and/or flavours and/or fragrances), milk, optionally cream, lactose or enzyme (in lactose-free product), optionally yeast (if the product is heated before packaging, the active microflora from yeast is not present in the composition of the final product), fat, casein, minerals, vitamins, water, proteins (*α*-lactalbumins, *β*-lactoglobulins, serum albumins, immunoglobulins, lactoferrin, glycomacropeptides), wherein the milk product comprises whey protein from 60 to 95 wt%.

In a preferred embodiment of the invention, the (unflavoured) milk product comprises 25 to 50 wt% of protein curd, in which the dry matter content is 20 to 24 wt% and that of lean whey is 50 to 75 wt%.

If the invention is desired to be used for the manufacture of an acidified milk product (in the preferred embodiment, e.g. yogurt), the homogenised and cooled mixture is pumped into a technological tank and yeast, lactase, etc. are added according to the recipe (not shown in the drawings). The resulting mixture is processed depending on the desired acidified milk product (it is acidified for different milk products at different temperatures and acidification times until the required pH is achieved) and optionally additional flavours and/or fragrances and/or sweeteners are added. The manufacture of the milk product (including acidified milk product) is carried out in a manner known from the art and is not separately described here.

Advantages of the invention:
- the production residue of the dairy industry, i.e. the whey is recovered;
- the method uses only whey related to and obtained from milk, proteins and fats obtained from whey;
- when consuming a milk product with reduced casein content, consumers with the corresponding indication may experience fewer deficiencies.

Moreover, the product made according to the invention has significant benefits for the consumer, both related to health and nutritional intake. These days the deficiencies associated with lactose intolerance and milk allergy are acknowledged, casein may have an important effect on the latter. In conventional milk products, such as drinking milk, the casein content is about 80%. However, in the cheese making process almost all of the casein goes into the cheese, and the remaining whey is practically casein-free. Ricotta is made from whey, and pure ricotta, for example, has about 98 to 99% of whey protein and 1 to 2% of casein. If casein is reduced in a milk product, a consumer with the corresponding indication may experience fewer deficiencies when consuming such a milk product.

Furthermore, whey proteins, inter alia, (see https://www.healthline.com/nutrition/10-health- benefits-of-whey-protein):
- are proteins of high nutritional value;
- support muscle growth;
- may reduce blood pressure;
- may reduce weight;
- may reduce the feeling of hunger.

## Claims

1. A method for refining whey to produce the source material for a milk product includes steps: whey/whey concentrate obtained during cheese manufacture is buffered/stored, heated and pumped into a technological tank to form a protein curd, **characterised in that** additional steps are performed:
- milk according to the recipe is added to the buffered/stored whey/whey concentrate;
- the protein curd is formed during heat treatment;
- a lean whey is separated from the protein curd;
- the separated lean whey is partially added back to the protein curd;
- the protein curd and the lean whey partially added back to it are pumped into a mixer tank and mixed;
- the resulting mixture is homogenised under pressure and cooled to an emulsion-like liquid protein mass, in which the protein mass comprises whey protein 60 to 95 wt%.

2. A method according to claim 1, **characterised in that** a whey concentrate is added to the buffered/stored whey according to the recipe.

3. A method according to claim 1, **characterised in that** a whey concentrate is prepared from the whey obtained during cheese manufacture.

4. A method according to claim 1 and 3, **characterised in that** water is added to the buffered/stored whey concentrate according to the recipe.

5. A method according to claims 1 to 4, **characterised in that** the lean whey is added back to the protein curd according to the recipe.

6. A method according to claims 1 to 5, **characterised in that** cream is added to the protein curd according to the recipe.

7. A method according to claims 1 to 6, **characterised in that** heating is carried out up to a temperature of 65 °C.

8. A method according to claims 1 to 7, **characterised in that** the heat treatment is carried out at a temperature of 83 to 90 °C.

9. A method according to claim 8, **characterised in that** the heat treatment is carried out with direct steam.

10. Method according to claims 1 to 9, **characterised in that** homogenisation is carried out at a pressure of 80 to 150 bar and at a temperature of 35 to 90 °C.

11. A method according to claims 1 to 10, **characterised in that** the homogenisation is carried out in multiple stages.

12. A method according to claim 1 to 11, **characterised in that** a milk product is prepared from a homogeneous emulsion-like liquid protein mass, to which flavours and/or fragrances and/or sweeteners are optionally added.

13. A milk product made from whey as a source material, which is prepared according to the method according to claims 1 to 12 and which comprises whey, milk, optionally cream, water, lactose or enzyme, proteins, fat, casein, minerals, vitamins, optionally a leavening agent, optionally flavours and/or fragrances and/or sweeteners, **characterised in that** the milk product comprises 60 to 95 wt% whey protein.

14. A milk product according to claim 13, **characterised in that** the milk product comprises 25 to 50 wt% of protein curd, in which the dry matter content is 20 to 24 wt% and that of lean whey is 50 to 75 wt%.
